(19)

**Europäisches Patentamt**
**European Patent Office**
**Office européen des brevets**

(11) **EP 4 235 469 B1**

(12) **EUROPEAN PATENT SPECIFICATION**

(45) Date of publication and mention
of the grant of the patent:
**11.02.2026 Bulletin 2026/07**

(21) Application number: **22305211.9**

(22) Date of filing: **25.02.2022**

(51) International Patent Classification (IPC):
**G06F 21/52** (2013.01)   **G06F 21/55** (2013.01)
**G06F 21/56** (2013.01)   **G06N 20/00** (2019.01)
**H04L 9/40** (2022.01)

(52) Cooperative Patent Classification (CPC):
**G06F 21/52; G06F 21/552; G06F 21/554;**
**G06F 21/566; G06N 20/00; H04L 63/1416**

(54) **A SYSTEM FOR DETECTING MALWARES IN A RESOURCE-CONSTRAINED DEVICE**

SYSTEM ZUR DETEKTION VON MALWARE IN EINER RESSOURCENBESCHRÄNKTEN
VORRICHTUNG

SYSTÈME DE DÉTECTION DE LOGICIELS MALVEILLANTS DANS UN DISPOSITIF À
RESSOURCES LIMITÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.08.2023 Bulletin 2023/35**

(73) Proprietors:
• **Commissariat à l'Energie Atomique et aux
Energies
Alternatives
75015 Paris (FR)**
• **Université Grenoble Alpes
38400 Saint-Martin-d'Hères (FR)**
• **Institut Polytechnique de Grenoble
38000 Grenoble (FR)**

(72) Inventors:
• **POLYCHRONOU, Nikolaos
38054 GRENOBLE Cedex 09 (FR)**
• **THEVENON, Pierre-Henri
38054 GRENOBLE Cedex 09 (FR)**
• **PUYS, Maxime
38054 GRENOBLE Cedex 09 (FR)**

• **BEROULLE, Vincent
26000 VALENCE (FR)**

(74) Representative: **Atout PI Laplace
Immeuble Up On
25 Boulevard Romain Rolland
CS 40072
75685 Paris Cedex 14 (FR)**

(56) References cited:
**US-A1- 2020 293 657**

• **BOURDON MALCOLM ET AL: "Hardware-
Performance-Counters-based anomaly detection
in massively deployed smart industrial devices",
2020 IEEE 19TH INTERNATIONAL SYMPOSIUM
ON NETWORK COMPUTING AND
APPLICATIONS (NCA), IEEE, 24 November 2020
(2020-11-24), pages 1 - 8, XP033871187, DOI:
10.1109/NCA51143.2020.9306726**
• **KADIYALA SAI PRAVEEN KSP463@GMAIL COM
ET AL: "LAMBDA", ACM TRANSACTIONS ON
EMBEDDED COMPUTING SYSTEMS, ACM, NEW
YORK, NY, US, vol. 19, no. 4, 19 June 2020
(2020-06-19), pages 1 - 31, XP058452173, ISSN:
1539-9087, DOI: 10.1145/3390855**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a system for detecting malwares occurring on a resource-constrained device, for example an IoT or I-IoT device. The invention also concerns the use of machine learning algorithms to learn how to differentiate malwares from legitimate applications.

Every day, new malwares are discovered, leaving Internet of Things (IoT) and Industrial IoT (I-IoT) devices vulnerable to cybersecurity attacks. Some of the existing vulnerabilities rely on vulnerabilities either in the Software (SW) code or in the Hardware (HW). For example, an attacker can use the attacks such as Crypto-locker, Crypto-mining, Rowhammer, Spectre or other known attacks to damage, steal data, or extract secrets from the device.

Even if most of the vulnerabilities are handled during the development of the products, the likelihood of an attacker bypassing the system using some of the system's vulnerabilities is high. Further, there exist many hardware vulnerabilities, which make it expensive to fix them all. It is expensive as it will need the redesigning of the architecture, but still it will leave old devices vulnerable.

The so-called attacks or malwares are malicious applications running alongside legitimate applications. The attackers will use these malicious applications to penetrate the system and succeed their cause. We can distinguish the attacks in the following categories:

- software attacks targeting vulnerabilities in the software code,

- hardware attacks targeting vulnerabilities in the hardware, and

- software attacks targeting hardware vulnerabilities.

The targeted vulnerabilities result from the complexity of modern systems. First of all, software programs are more and more complex and large in size. Secondly, the hardware design becomes more and more complex to address the increasing needs for performance, and memory. All this complexity gives the opportunity to attackers to exploit the vulnerabilities and perform attacks such as buffer overflow, Return-Oriented Programming (ROP), Cache Side Channel Attacks (CSCA), Rowhammer, Spectre, e.g..

As IoT and I-IoT devices are very constraint devices, manufacturers will generally not choose security solutions that add an overhead in term of power consumption, memory, or silicium footprint. Complex solutions for the detection of malware in IoT and I-IoT exist and perform with good metrics. But, the complexity of these solutions forbids them from using them in a real resource constraint system.

Therefore, a general problem to be solved is to develop a low complexity solution to detect malwares that is compatible with the limited resources of an IoT device.

Different solutions exist to detect malwares in operation.

A first category of solutions is the use of antimalware or antivirus. An antivirus software scans the incoming files or code found in the networks traffic. Antivirus programs use an extensive database of known viruses and malwares, where their signatures are stored. The antivirus compares the signatures of the files or code with the known signatures in the database, and if a match is found the antivirus flags the file, code and removes them.

Their limitations are that to detect a malware, malwares signature should be known and stored in the database. In simple words, an antivirus can detect a malware only after it has affected some devices and its signature is known. Further limitation, is the easiness of obfuscating the malware's code to change its signature, helping it avoids its detection by the antivirus.

A second category of solutions is control or data flow integrity. Control Flow Integrity (CFI) and Data Flow Integrity (DFI) are techniques also used for malware detection. These techniques work by verifying the execution path complies with the original static control flow graph generated offline. Their major limitation is the memory overhead (more than 13%) and the performance overhead (as high as 10%). These solutions have a memory overhead because of the need to store the static control flow graph and a performance overhead as in each branch instruction executed there is a need to verify the validity of the branch before executing it.

A third category of solutions is based on Hardware Performance Counters (HPC). The HPCs are special purpose core registers found in most modern architectures.

Their use is to count hardware related events in the system. Such examples of events are the branch mis-predictions, executed instructions, Central Processing Unit (CPU) cycles, memory accesses e.g.. Their primary use was to help the developers debug their programs, observe the performance, and effects of their algorithms in the different hardware components. In recent years, these HPCs help the security engineers to detect malwares in the system using techniques such as Machine Learning (ML) as proposed in reference [TSS14], or Semantics-Based approaches as proposed in reference [DLZC15]. The number of available counters in each processor is dependent in the architecture of the CPU model. The HPCs can count events specific to the CPU core such as Level 1 (L1) cache misses and events of shared resources such as Level 2 (L2) cache misses. Each counter can be programmed writing the appropriate configuration in specific HPC configuration registers. The HPC counters can have sizes of 32bit or 64bit. HPCs can count the events related to the hardware components with almost no overhead. Further examples of hardware events that can be counted by HPCs are given on reference [ARM] for specific execution with ARM processors.

Malwares and normal applications share the resources of the system. They both use the software and hardware resources. In our benefit we can distinguish the executed application - normal or malware - from the behavior of the software resources or hardware components. To do this, the HPCs registers can be read, to count events specific to the hardware components.

The HPCs values can be used to catch the side effects, the execution of the malware has on the system. We call a side effect the difference in the values measured from an HPC during normal application and malware executions. To better understand the term side effects, we give the following example. CSCA (Cache-based Side-Channel Attacks) is a particular malware which makes heavy use of the cache memory. During the execution of CSCA we observe an increased amount of Last Level Cache (LLC) misses. During normal operation, the system is configured to avoid missing in the LLC, which, if it happens, will affect the performance of the system. Though, the malware and normal applications exhibit a different behavior in their usage of the hardware component of the LLC. This different behavior we refer to as side effect.

The solutions to detect malware using HCPs are generally based on semantic approaches or machine learning. The machine learning algorithms used can be either supervised, unsupervised, or semi-supervised. The systems where these algorithms are implemented can be either on the device locally or in a remote device such as the Cloud. These solutions can be implemented in hardware such as a Field Programmable Gate Array (FPGA), Application Specific Integrated Circuit (ASIC) or software code such as a kernel module.

The existing solutions using HPC to detect malwares found in the literature have however some limitations.

A first limitation is the slow monitoring intervals used to extract the HPC measurements. When a slow monitoring interval is used, the attackers can benefit to obfuscate their malware code to avoid detection.

Then, there exist solutions that are able to detect a wide variety of malwares, but these solutions use complex machine learning algorithms to succeed it. These complex solutions use a lot of the systems resources or special systems such as a Graphics Processing Unit (GPU) to build the detection algorithms. These complex machine learning algorithms can mostly be implemented on Desktop or Cloud environments. Using simpler machine learning algorithms that require less system resources results in more specialized detection of malwares. Though, the second limitation is a specialized detection of malware or in simpler words the limited capability of detecting multiple malware with simple machine learning algorithms.

A third limitation is that most of the solutions are implemented as a software code. As the software detection mechanism shares system resources with the applications which it monitors, we observe a performance overhead. The performance overhead is due to the context switch of applications and the detection algorithm and the sharing of resources.

Regarding a forth limitation, a software implementation of the detection algorithm makes it vulnerable to software attacks. Each day, new vulnerabilities are discovered in programs and the Operating System (OS) itself, which an attacker can benefit to target the detection mechanism with the goal to bypass the detection.

A fifth limitation of the prior art solution is that detection mechanisms using HPCs completely remove the ability of the user/developer to use them for their original purpose of debugging, performance analysis, tuning e.g..

Lastly, if the access to the HPCs is not prohibited, manipulation of the counters from an attacker can lead to false negatives.

US patent 9,996,694 discloses an unsupervised detection of anomalous processes using hardware features. The proposed solution is a detection mechanism which uses HPCs and machine learning algorithms for the detection of malware. The machine learning algorithms are implemented in hardware or software, in the local system or a remote system. The machine learning either in the local or the remote system is responsible for detecting the malware samples.

Contrary to this solution, the proposed invention can be also implemented in hardware or software but the machine learning algorithms exist in the local and a remote system. The local machine learning is responsible for filtering low probability samples and raising an alert during the detection of high probability samples. The local machine learning should filter HPC samples to reduce the amount of data needed to be sent in the remote machine learning. Further it raises an alert with the highest confidence for the existence of a malware sample. For example, the local machine learning can be implemented to succeed almost zero False Positives. An almost zero False Positives implementation implies that it is the designer who can set a limit in the amount of false positives that are acceptable in a period of time. The local machine learning also should be kept simple when the device under protection is of limited resources. The remote machine learning on the other hand is responsible of receiving the filtered data and deciding on the presence of a malware or not. The remote machine learning can be implemented using one or more of all the available machine learning algorithms. Resources are not limited in the remote machine learning, so no restriction about the complexity of the machine learning algorithm exists for the remote machine learning.

Besides, the present invention uses a technique for data scaling that is different from US 9,996,694. Data normalization and data scaling are applied to the dataset, so that the HPC extracted data have the same range. These techniques help the data from the different HPC counters to be in the same range, which helps with the training and the errors of the machine learning algorithms. Data normalization and data scaling convert the extract measurements from a set of first ranges to a second common range. The data scaling has the primary focus of further limiting the size of the extracted data. Further, it is formulated using an algorithm which could be implemented in hardware with limited resources. Any other data transformation technique could be used but its primary goal would be to limit the size of data.

US patent application 2019/0340392 proposes an anomaly detection in real-time multi-threaded processes on embedded systems and devices using hardware performance counters and/or stack traces.

US 2019/0340392 focuses on the detection of side channel attacks such as CSCA, Spectre, and Meltdown. On the contrary, the proposed invention targets a wider variety of malware such as software attacks targeting software vulnerabilities, and software attacks targeting hardware vulnerabilities.

The data transformation technique proposed in US 2019/0340392 is a Haar Wavelet signal transformation. This transformation targets to transform the HPC data from the time domain to the time/frequency domain. On the contrary, the present invention target first to minimize the size of the data and second to transform the data.

Also the proposed idea uses an anomaly detection algorithm (one-class support vector with a quadratic programming minimization function) for the detection of anomalies. In the present invention, the first local machine learning focuses on the data filtering to minimize the data needed to be sent to the remote machine learning for detection.

US patent application 2019/0130101 proposes a method and apparatus for detecting a side channel attack using hardware performance counters.

The proposed patent application uses machine learning algorithms to detect anomalies based in time series data. The disclosed solution is limited to the detection of side channel attacks. The proposed idea uses multiple thresholds for the detection of malware. Further analysis is performed from more computationally intensive techniques using mathematical algorithms for extracting extra information or a second machine learning.

Finally, the scientific publication [WCILK16] describes another method for detection and identification of malware that is based on adaptive compressive sensing. The proposed detection mechanism is implemented in a remote system and aims at reducing the size of the data sent to a remote system for further evaluation. The proposed invention and the solution proposed in publication [WCILK16] differ on the following. First, the proposed invention proposes a local-remote implementation using machine learning to classify the samples. On the other hand, publication [WCILK16] implements a remote signature based detection mechanism, which comes with the limitation mentioned before. On the proposed invention, data filtering is succeeded with the use of a local machine learning in contrast to publication [WCILK16] that uses matrix multiplication for data compression.

The following documents also disclose methods for detection and identification of malware:

- Bourdon Malcolm et al: "Hardware performance counters based anomaly detection in massively deployed smart industrial devices", 2020 IEEE 19th international symposium on network computing and applications (NCA),

- Kadiyala Sai Praveen: "Lambda", ACM transactions on embedded computing systems, ACM, NY

- US2020/293657

The proposed invention aims at curing the deficiencies of prior art solutions with a system for detecting malwares that comprises a local machine learning module implemented in the resources constrained device that is used for data filtering and high probability malware detection and a remote machine learning module implemented in a remote server, such as a cloud server, for finalizing the malware detection on the filtered data.

The invention is compatible with limited resource devices such as IoT/I-IoT devices, for example smartphones, sensors, controllers or any device that has limited or is sensitive to resources, memory or energy consumption. The invention is also compatible with multiple malware family detection. To succeed detecting a broad set of malwares, complex solutions must be used. As these solutions are not fitted to be implemented in the targeted devices, the complex machine learning module is implemented in a remote system with no resource limitation.

In order to transmit data to the remote machine learning module, the HPC measurements are stored locally. To limit the amount of data needed to be stored, a scaling technique and a local machine learning technique are used to limit the size of the data to store. Further, the local machine learning module in case of a high probability sample can raise an alert, to quickly react to the suspected malicious sample.

The local solution can be implemented in software or hardware. Hardware solutions should be preferred as they provide more security than software solutions.

The invention provides a fast monitoring of the executed applications. Monitoring fast allows better analyzing the executed applications and is more difficult for the attacker to obfuscate their malware code to bypass the detection mechanisms. On the downside, fast monitoring increases the amount of extracted HPC data. To address this limitation, a first local machine learning system is used to limit the amount of these data stored in the local system to be sent after to the remote system for further evaluation.

Though the invention is described in the context of application to hardware event counters provides by Hardware Performance counters, it is not limited to these types of data and can be generalized to any internal hardware events related to data such as, for example system calls or any other internal signal that provides information on hardware events.

The invention relates to a system for detecting malwares in a resources constrained device, the system comprising:

- a monitoring module, embedded on the device, for measuring, at a predefined adaptable monitoring period, internal hardware events related data,

- a local machine learning module, embedded on the device, for providing a confidence score that each monitored data is a malware, the local machine learning module being configured to raise an alert if the confidence score is higher than a first predefined alert threshold and to locally store the monitored data in a memory if the confidence score is lower than the first predefined alert threshold and higher than a second predefined suspicious threshold,

- a remote machine learning module, embedded on a remote server, for receiving the stored monitored data at a predefined transmission rate and process the received data to detect if it corresponds to malware.

In a particular embodiment of the invention, internal hardware events related data are hardware events counters.

In a particular embodiment of the invention, the system for detecting malwares furthermore comprises dedicated hardware performance counters configured to store hardware events counters and being inaccessible by the operating system of the device.

In a particular embodiment of the invention, the local machine learning module implements a first machine learning algorithm and the remote machine learning module implements a second machine learning algorithm having a detection accuracy higher than the first machine learning algorithm.

In a particular embodiment of the invention, the second machine learning algorithm is a time-series machine learning algorithm having a history table for storing a predefined number n of samples and the local machine learning module is furthermore configured to, when the confidence score is lower than the first predefined alert threshold and higher than the second predefined suspicious threshold, store the monitored data and at most n consecutive previous monitored data having a confidence score lower than the second predefined suspicious threshold.

In a particular embodiment of the invention, the first predefined alert threshold is determined in such a way that the monitored data for which an alert is raised by the local machine learning module has a predetermined amount of false positives.

In a particular embodiment of the invention, the first predefined alert threshold is determined after the local machine learning module is trained in such a way that an amount, equal to said predetermined amount of false positives, of confidence scores of training data corresponding to normal applications are above the first predefined alert threshold.

In a particular embodiment of the invention, the second predefined suspicious threshold is determined in such a way to minimize the amount of data locally stored that is not a malware to a predefined amount.

In a particular embodiment of the invention, the predetermined monitoring period is equal to at most half a minimum amount of time each process must run on the device before being preempted by the operating system of the device.

In a particular embodiment of the invention, the system for detecting malwares comprises a data limiter module configured for scaling monitored data to a normalized range.

In a particular embodiment of the invention, the data limiter module is configured to:

- determine integer values a and b such that a is at least equal to the maximum value of the monitored data, b is at most equal to the minimum value of the monitored data and a-b is equal to a power of two,

- calculate the scaled data y as $y=(x-b).2^{8-c}$, where x is the monitored data and $a-b=2^c$.

The invention also relates to a computer-implemented method for detecting malwares in a resources constrained device, the method comprising:

- measuring, at a predefined adaptable monitoring period, internal hardware events related data,

- executing a first machine learning algorithm on the device, for providing a confidence score that each monitored data is a malware, the local machine learning algorithm being configured to raise an alert if the confidence score is higher than a first predefined alert threshold and to locally store the monitored data if the confidence score is lower than the first predefined alert threshold and higher than a second predefined suspicious threshold,

- transmitting the stored monitored data, at a predefined transmission rate to a remote server,

- executing, at the remote server, a second machine learning algorithm on the transmitted monitored data to detect it if corresponds to malware.

The invention also relates to a computer program product, the computer program product comprising a computer-readable storage medium having computer executable instructions embodied therewith, the computer executable instructions being executable by a processor to cause the processor to perform the steps of the method of the invention.

The above and other items, features and advantages of the invention will be better understood by reading the following more particular description of the invention in conjunction with the figures wherein:

Figure 1 shows a high view of a system for detecting malwares according to an embodiment of the invention,

Figure 2 shows a diagram of a system for detecting malwares according to an embodiment of the invention,

Figure 3 shows an illustration of the use of Hardware Performance Counters according to an embodiment of the invention,

Figure 4 shows examples of accepted to use HPC measurements distribution for normal applications and malwares,

Figure 5 illustrates an operation of scaling according to an embodiment of the invention,

Figure 6 shows an example of probability filtering alert aggregation according to an embodiment of the invention.

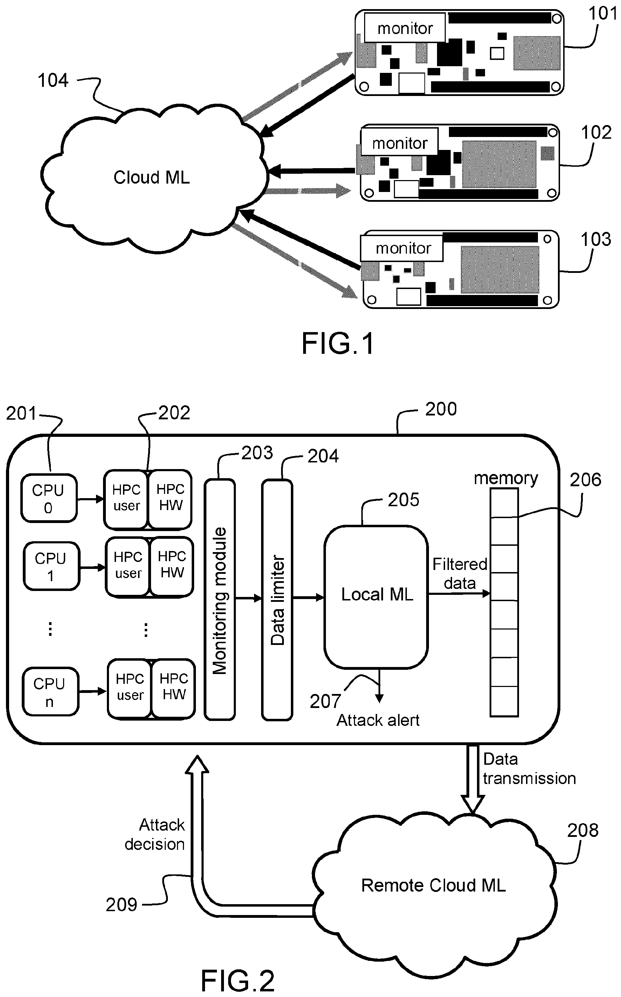

Figure 1 shows a high view of a system according to the invention. The proposed system is partly implemented on the resource limited device on which the data filtering and high probability malware sample detection is to be performed and partly in a remote server (for example cloud server) on which the malware detection is to be performed with higher accuracy. As shown on figure 1, the invention can be implemented on one or several resource limited devices 101,102,103 that each communicate with a remote server 104 on which is also implemented a part of the invention as will be detailed below. The invention is preferably implemented in hardware, in particular for safety reasons but can also be totally or partly implemented in software.

A low level architecture of the proposed system is depicted on figure 2.

The invention applies to a resource constrained device 200 which can implement simple micro-controllers or complex multiprocessing systems. The device can run or not an Operating System (OS) or Real Time OS (RTOS) or baremetal. The device under monitoring can have one or any number of central processing units (CPU) 201. It can run each application one after the other or can use multitasking. When multitasking is used each process will be scheduled by the OS to share the device resources with other processes. Each process that is scheduled must run at least a minimum time before being preempted, i.e. before releasing the resources so another scheduled process can execute. This minimum amount of time each process must run before being preempted is called sched_min_granularity_ns which can be equal, for example, to 2ms.

The device 200 can implement HPC counters 202 or they can be added to the architecture as will be explained below. The HPC counters were first implemented for enabling the user to debug, tune, and analyze the performance of their applications regarding the usage of the system's hardware. As explained above, HPC counters are used to store hardware events counters based on a predefined configuration of events to monitor.

These HPC counters are accessible from user-space. Depending on the architecture, a kernel module might be needed to enable them for user-space access. HPCs used for malware detection are unavailable for other uses e.g.,debug, tuning, etc, restricting their usage for the primary reason they were implemented. Secondly, the OS has access to these counters being able to modify their configuration. As there are multiple malware families targeting the OS to escalate privileges, if successful a security backdoor can allow attackers to bypass any implemented detection mechanism using the HPCs. To bypass the detection mechanism, the attacker only needs to modify the measured HPC events, or reset to zero the measured HPC events, or disable the HPC counters from measuring hardware events, or freezing the HPC measurements to a value.

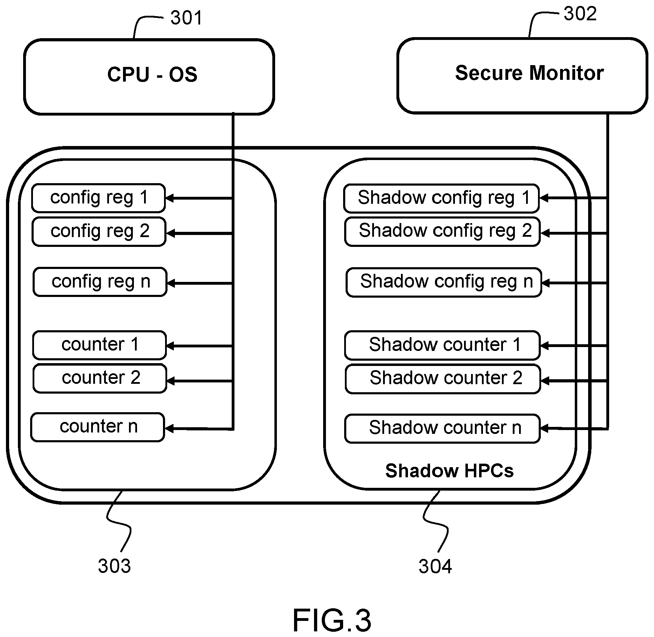

To address this potential security backdoor, an embodiment of the invention relies on the usage of shadow HPC counters, only available to the monitoring module according to the invention. Shadow HPC counters are specific dedicated counters that are implemented as part of the system according to the invention. These HPCs are configurable and readable only from the secure monitor part of the invention. These shadow HPC counters allow the secure monitor to read the hardware events without the OS interfering and also allow the monitor to be transparent to the OS. The term transparent is used here to mean that the OS has no knowledge if the HPCs are used to measure specified events, which HPC events are used for monitoring, what is the time interval between consecutive measurements etc. These shadow HPCs allow maximum security when the OS is not trusted. The design of the shadow HPCs can be seen in figure 3.

Figure 3 shows on the right side user-space HPCs 303 that are accessible from the OS 301 and shadow HPCs 304 that are exclusively accessible from the secure monitor 302 part of the invention. **If** the OS is trusted, user-space HPCs 303 can be used, otherwise it is preferable to use dedicated shadow HPCs 304.

User-space HPCs and shadow HPCs are each configured to monitor several hardware events according to a configuration stored in a configuration register.

As will be explained later, though the invention is described in the context of the use of HPCs, it can apply to other type of internal hardware events data or signals that can be measured on the device to monitor the impact of malware.

Returning to figure 2, the system of the invention also comprises a secure monitoring module 203. The monitoring module is responsible for configuring and reading the HPC counters. The monitoring module can be implemented in software or hardware. A software implementation must trust the OS. The monitoring module is configured to extract the HPC measurements from the HPCs every monitoring interval. The monitoring interval is the time between consecutive measurements readings. Further, the monitoring module is responsible for configuring the HPCs with the HPC events to be monitored. As said before, each application must run at least the sched_min_granularity_ns period when multiple processes compete for the CPU resources. **If** the monitoring module reads the HPCs with a monitoring interval greater than the sched_min_granularity_ns then a security backdoor is possible. This is possible as the attackers can force the malware to run at the sched_min_granularity_ns and for the rest of the (monitoring interval - sched_min granularity_ns) they execute normal applications or evasive techniques such as sleep(), or NOP instructions. This will allow the attackers to modify the expected behavior, by obfuscating the malware execution with normal execution to effectively shift the expected malware HPC values closer to the normal execution. Considering the different behaviors normal applications can have and the difficulty to model effectively all of them to be able to detect malware without False Positives or False Negatives, an attacker that can obfuscate code to change the malware expected behavior makes the detection problem more difficult. Therefore, advantageously, the monitoring module reads the HPCs with a monitoring interval that is at most half the sched_min_granularity_ns period.

Returning to figure 2, the system of the invention also comprises a data limiter 204 that is configured for scaling the data read by the monitoring module 203 so that it is compatible with machine learning algorithms and also for limiting the size of data to store.

The data limiter 204 is responsible for limiting the size of the measurements as extracted from the HPCs. Further, as machine learning algorithms are susceptible to different ranges of the different features (in the described example a feature is an HPC event counter), a common range must be applied to all the HPCs. An example of an algorithm for scaling a dataset is the Min Max Scaler defines by the formula:

$$scaled_{data} = \frac{data - data_{min}}{data_{max} - data_{min}}$$

This will scale the data to values between [0,1]. This requires the use of floating point number representation. In case of a hardware implementation of the secure monitor, the floating points require a floating point unit, plus the division to perform the Min Max Scaling. This will require multiple resources to be implemented in a resource constrained environment. To avoid the division and the use of floating point numbers, a hardware friendly technique is proposed.

This technique relies on two new values a and b, which must respect the following conditions.

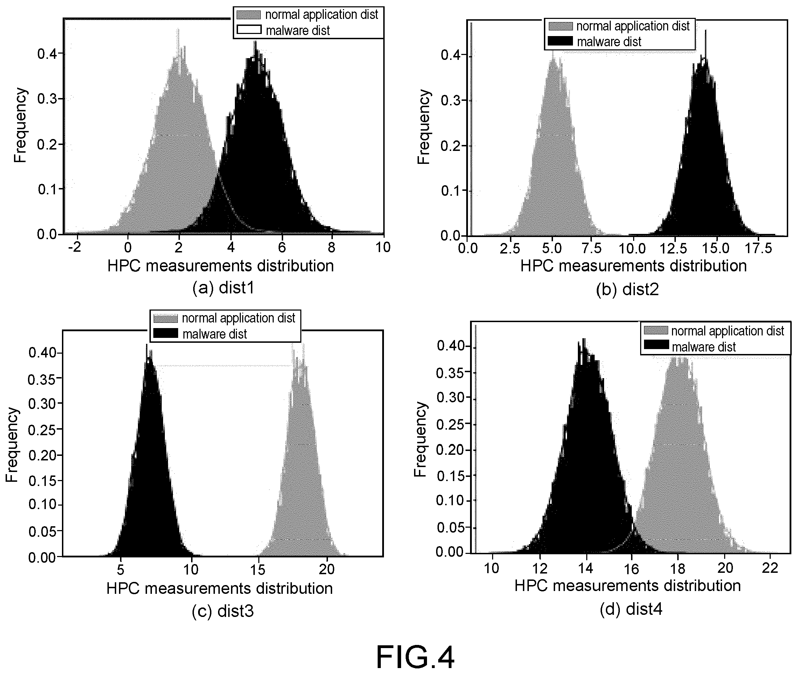

First, the normal and attack distributions of the normal applications and malware should respect the distributions as shown in figure 4. Figure 4 shows four examples of measurements distribution for normal application and malware application for four different event counters measurements. All these distributions correspond to acceptable measurement distributions because malware and normal distributions are clearly separable and therefore can be detected by a machine learning algorithm.

To find HPC events that respect the mentioned distributions, a possible solution is to apply a feature extraction algorithm such as Mutual Information, Chi-Squared, Pearson correlation coefficient, Anova, or any other suitable method. In other words, out of all possible HPC events that can be monitored, the feature extraction algorithm provides information on which HPC events respect distributions that are compatible with a potential separation of malware and normal applications by the machine learning algorithm.

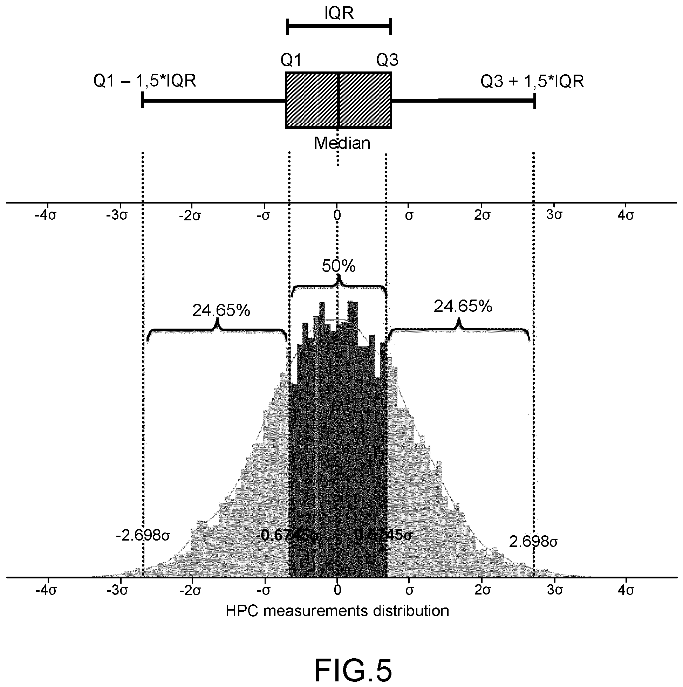

Second, to reduce the effect of outliers in the scaling, the Min Max values can be calculated using the Q1 and Q3 quantile as seen on figure 5. For example, Min of the dataset is equal to the Q1-1.5*IQR and Max of the dataset is equal to the Q3+1.5*IQR, where IQR=Q3-Q1.

The new value a must be such that Max $\leq$ a.

The new value b must be such that b $\leq$ Min.

The subtraction of a and b must be an integer which is a power of two: a-b =$2^c$.

The Min Max scaling algorithm is then implemented with the following:

$$scaled_{data} = \frac{data-b}{a-b}.2^8 \rightarrow scaled_{data} = (data - b).2^{8-c}.$$

The above equation requires only a subtraction and a shift right/left operation.

The scaled data are, for example, now in the range [0,255]. Considering the HPC counters are 64 or 32 bit, this scaling/limiting allows to limit the data size by four times. In addition, it further improves the local machine learning results due to the uniform scaling of all the features.

In other words, the data limiter 204 is configured for limiting the size of data while also scaling the data to a common range that is appropriate for the machine learning algorithm.

The scaled data is then processed by a local machine learning module 205 that implements a first machine learning algorithm.

The local machine learning module implements a machine learning algorithm that can be either supervised or unsupervised. It can be implemented as any of the available machine learning models that can output probabilities or confidence score of belonging to one or more class. The only restriction is that it should not consume a lot of resources. The resources available for the implementation of the proposed solution can change from system to system. It is the designer that should decide for the available resources. Examples of the algorithms that can be used are Logistic Regression, Support-vector machines (SVM), Random-Forest, XGBoost, Decision Trees, Neural Networks.

If some classifiers are defined to only predict the class that a sample belongs with no possibility to output probabilities, then these algorithms are not considered for the proposed invention and should be modified to adapt to the requirements of the proposed invention. The term "probability" employs here also refers to a confidence score that the ML algorithm outputs to decide if the input data relates to malware or not.

The local machine learning algorithm does not need to have a very high accuracy of detection as it is completed with a more precise remote machine learning algorithm as will be explained later.

The local machine learning algorithm is mainly responsible first for limiting the size of the data to be sent to a remote system such as a cloud server by filtering the HPC measurements with low probability of being a malware sample. Secondly, it is responsible for raising an alert in case high probability malware samples are detected. The main goal of the local machine learning module is filtering of incoming HPCs measurements. The detection of malware is a secondary goal as an objective is to avoid False Positives.

The local machine learning module will filter HPC measurements that have probabilities of being a malware sample less than a suspicious threshold, it will store HPC measurements that have probabilities greater than the suspicious threshold and less than an alert threshold. Finally, it will raise an alert if the HPC measurements have a probability of being malware greater than the alert threshold.

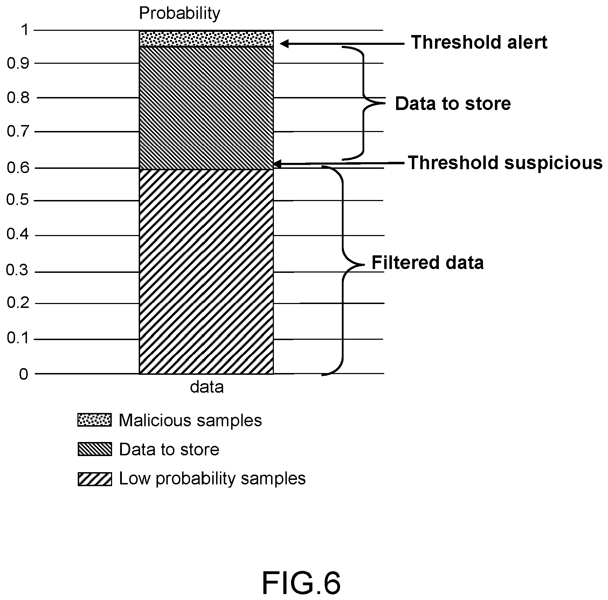

Figure 6 shows the range of probabilities or confidence scores provided as output of the local machine learning algorithm with the two thresholds: alert threshold and suspicious threshold.

An advantage of using a local machine learning algorithm to filter data is that it can process locally the data corresponding to normal or malware applications with a very high confidence score and only leaves uncertain data to be processed by a more complex machine learning algorithm.

The alert threshold is defined, for example, such as to have zero false positives. In other words, the local machine learning module should raise an alert that a malware is detected with the highest possible probability, that is to say only if its decision is highly accurate.

The alert threshold is then defined as the minimum threshold to have false positives on trained data. To determine the alert threshold, the local machine learning algorithm is first trained on a set of training data and then the alert threshold is defined as the minimum threshold so that the output confidence scores provided by the local machine learning based on the set of training data when compared to this threshold has no false positives. If the local machine learning algorithm is supervised, this is done by comparing if a confidence score higher than the alert threshold does correspond to a malware application (from the labeled trained data).

Generally, the alert threshold is determined as close to 1, for example 0.99. If the threshold reaches the value of 1, then it means that there is no threshold that allows raising an alert with zero false positives. In this case, the local machine learning does not perform malware detection but only filters data.

In a variant embodiment, the alert threshold can be defined to have a certain amount of false positives allowed if the system allows to raise an alert for a small amount of false positives, for example a certain percentage of false positives in a given time period.

The suspicious threshold is defined, for example, in such a way to minimize the amount of data locally stored that is not a malware (e.g. the number of false positives) to a predefined amount.

After separating the probabilities or confidence scores to suspicious data, data that raise an alert, data to be filtered, separate actions are taken. Low probability data (having a confidence score below suspicious threshold) are filtered and not stored in the system. Suspicious data (having a confidence score above suspicious threshold and below alert threshold) are stored in a memory 206 in the local system.

The local machine learning module 205 sends stored data to a remote machine learning module 208 implemented in a remote system such as a cloud server at a predefined period send_remote_time. The memory 206 is limited in size. If the maximum amount of data possible is stored in the memory 206, then the stored data is sent to the remote machine learning module 208 before the expiry of the predefined period send_remote_time. During normal operation the amount of HPC data stored as suspicious is limited. During malware execution the amount of suspicious data increases. Running only normal applications, we can find the maximum amount of suspicious data stored at the expiry of send_remote_time. This will be the amount of memory required to design memory 206. If the medium memory saturates before send_remote_time then this can be an indicator of malware execution. In case of data that raise an alert, the local system can be configured with a strategy to reset the system to normal operation.

The data that the local machine learning module 205 labeled as suspicious will be sent to the remote machine learning module 208 every send_remote_time or if the local memory saturates before send_remote_time.

The data can be sent encrypted or any other security algorithm can be applied before transmitting the data to the remote module 208. The memory necessary for the local system to have to store the data to be sent to the remote can be defined as follows.

The system can support until X bytes of memory. If during system monitoring X bytes of HPC measurements are stored before the specified send_remote_time, then the local system will send the data to the remote module 208 immediately.

The designer can run the monitoring system with only normal applications. For the specified send_remote_time, the designer can calculate the amount of HPC data the local machine learning module 205 falsely labels as suspicious. Running the same experiment for multiple send_remote_time periods, the designer can choose the necessary memory size as the average or maximum or any other value between average and maximum of the falsely labeled normal data as suspicious, the local system needs to store to the local memory. For example, the designer of the memory can consider the maximum of the data to be stored to the local memory under normal operation only. This choice of design is advantageous, as transmitting the data to the remote module 208 using a communication interface is energy consuming. Choosing the maximum, we avoid sending data to the remote module 208 the majority of the system operation time, before send_remote_time.

The remote module 208 is responsible for detecting malware with high accuracy. The remote module 208 can implement supervised, semi-supervised, or unsupervised machine learning. It can be complex and utilize numerous resources as in the remote module 208 there is no restriction of resources. The remote machine learning algorithm is preferably an unsupervised or semi-supervised machine learning algorithm so it will be able to detect unknown malware or the so called zero-day attacks. The remote machine learning algorithm processes the incoming data, predict the class of the samples, and if an anomalous sample is detected it notifies the system. The remote machine learning algorithm can be one of the following algorithms: AutoEncoder, Neural Networks, Convolutional Neural Network, One-class SVM, Random Forest, XGBoost, k-nearest neighbors (KNN). The remote machine learning algorithm is a more complex algorithm than the local machine learning.

The local machine learning algorithm has a detection accuracy that is lower than the remote machine learning algorithm. This is due to the fact the local machine learning algorithm needs to be less complex to be implemented to constrained resources device.

In case of an anomalous sample, the remote module 208 will notify the local systems to take appropriate actions. As the remote module 208 can be complex, it can potentially recognize the malware and provide with more specific instructions to the local systems.

Though the invention was described as based on machine learning algorithms that process hardware event counters, it can be extended to any internal hardware event related data or signal. For example, the invention also applies to system calls information.

In another embodiment, system calls information can be used as supplemental information to improve the detection of malware.

The local machine learning algorithm outputs probabilities or confidence scores for the input set of HPC data belonging to the malware class. As the local machine learning algorithm is simple, with the main focus on filtering the data to be sent in the remote module 208, it should not raise an alert for a normal application and should not filter malware. To increase the probability of raising an alert for only malware and decrease the probability of filtering malware samples, a system call history table can be used. It is possible to recognize malware from a system call pattern as shown for example in reference [DLZC15]. The history table of syscalls (system calls) for example can save information for 4ms. The syscalls can be extracted from the system observing the CPU's pipeline for system call instructions. For example, in some technologies a jump link address (jl syscall address) is used. The syscall address can be recognized using a Finite State Machine (FSM) or a ROM table. If the syscall belongs to a suspicious subset of syscalls then the syscall can be saved. When the local machine learning outputs the probability for the current HPC set of data, another FSM can look the syscall history table. If the probability of the sample is less than the threshold and a suspicious syscall pattern can be found in the history table, then the FSM can increase the probability of the current HPC set by a predefined amount. If a sample has a very high probability of being a malware, but the syscall history table does not reveal a suspicious syscall pattern, then the FSM can reduce the probability by a predefined amount. If the new probabilities are still less or higher respectively of the suspicious or high probability thresholds, no further action is taken, and the samples are stored to be sent to the remote module 208 or raise an alert.

In another embodiment of the invention, in case a time-series machine learning algorithm is used for implementing the remote module learning module such as a recurrent neural network, for example a Long Short-Term Memory network (LSTM), the local machine learning module is modified to support the fact that a time-series machine learning algorithm needs a history table of n past samples to process in order to elaborate a detection.

Then, the local machine learning module needs to implement a history table, for example a FIFO module. This history table stores the n previous HPC samples. The value n depends on the amount of previous n monitoring intervals HPC data the time-series remote module machine learning algorithm needs to work. For example, n can be taken equal to 3.

If a new sample is labeled as suspicious by the local machine learning algorithm, it is stored in the memory with the n last sets of HPC measurements. If the current sample is labeled as normal, the least recently added to the history table sample is discarded, and the current measurement is added. In other words, the history table stores every sample labeled as suspicious with at most the n previous samples since the last suspicious sample. By doing so, the local machine learning module can transmit to the remote machine learning module every sample labeled as suspicious with the n previous samples.

To avoid adding the same samples again, in case the next measurement is labeled as suspicious, a finite state machine keeps track of the previous stored to memory measurements times and the current measurement time.

Further, we store an extra bit in the memory, indicating the suspicious measurements. For example, '1' indicates a suspicious measurement and '0' a normal measurement. The remote time-series machine learning algorithm uses this information to predict the suspicious sample using the previous n samples.

If needed, in case of a suspicious sample, the next measurement could also be stored to memory to be sent in the remote ML for further processing.

References

[TSS14] Adrian Tang, Simha Sethumadhavan, and Salvatore J Stolfo. Unsupervised anomaly based malware detection using hardware features. In International Workshop on Recent Advances in Intrusion Detection, pages 109-129. Springer, 2014.

[DLZC15] Sanjeev Das, Yang Liu, Wei Zhang, and Mahintham Chandramohan. Semantics based online malware detection: Towards efficient real-time protection against malware. IEEE transactions on information forensics and security, 11(2):289-302, 2015.

[WCILK16] Xueyang Wang, Sek Chai, Michael Isnardi, Sehoon Lim, Ramesh Karri. Hardware Performance counter-based malware identification and detection with adaptive compressive sensing. ACM Trans. ARchit. Code Optim. 13,1,Article 3 (March 2016).

[DLZC15] Sanjeev Das, Yang Liu, Wei Zhang, and Mahintham Chandramohan. Semantics-based online malware detection: Towards efficient real-time protection against malware. IEEE transactions on information forensics and security, 11(2):289-302, 2015.

[ARM] ARM Cortex-A72 MPCore Processor technical reference manual R0p1 https://developer.arm.com/documentation/100095/0001/performance-monitor-unit/events.

**Claims**

1.  A system for detecting malwares in a resource-constrained device (200), the system comprising:

    - a monitoring module (203), embedded on the device (200), for measuring, at a predefined adaptable monitoring period, internal hardware events related data (202),
    - a local machine learning module (205), embedded on the device (200), for providing a confidence score that each monitored data is a malware, the local machine learning module being configured to raise an alert (207) if the confidence score is higher than a first predefined alert threshold and to locally store the monitored data in a memory (206) if the confidence score is lower than the first predefined alert threshold and higher than a second predefined suspicious threshold,
    - a remote machine learning module (208), embedded on a remote server, for receiving the stored monitored data at a predefined transmission rate and process the received data to detect if it corresponds to malware.

2.  The system for detecting malwares of claim 1 wherein internal hardware events related data are hardware events counters.

3.  The system for detecting malwares of claim 2 furthermore comprising dedicated hardware performance counters (304) configured to store hardware events counters and being inaccessible by the operating system of the device.

4.  The system for detecting malwares according to any of previous claims wherein the local machine learning module (205) implements a first machine learning algorithm and the remote machine learning module (208) implements a second machine learning algorithm having a detection accuracy higher than the first machine learning algorithm.

5.  The system for detecting malwares according to claim 4 wherein the second machine learning algorithm is a time-series machine learning algorithm having a history table for storing a predefined number n of samples and the local machine learning module is furthermore configured to, when the confidence score is lower than the first predefined alert threshold and higher than the second predefined suspicious threshold, store the monitored data and at most n consecutive previous monitored data having a confidence score lower than the second predefined suspicious threshold.

6.  The system for detecting malwares according to any of previous claims wherein the first predefined alert threshold is determined in such a way that the monitored data for which an alert is raised by the local machine learning module has a predetermined amount of false positives.

7.  The system for detecting malwares according to claim 6 wherein the first predefined alert threshold is determined after the local machine learning module is trained in such a way that an amount, equal to said predetermined amount of false positives, of confidence scores of training data corresponding to normal applications are above the first predefined alert threshold.

8.  The system for detecting malwares according to any of previous claims wherein the second predefined suspicious threshold is determined in such a way to minimize the amount of data locally stored that is not a malware to a predefined amount.

9.  The system for detecting malwares according to any of previous claims wherein the predetermined monitoring period is equal to at most half a minimum amount of time each process must run on the device before being preempted by the operating system of the device.

10. The system for detecting malwares according to any of previous claims comprising a data limiter module (204) configured for scaling monitored data to a normalized range.

11. The system for detecting malwares according to claim 10 wherein the data limiter module (204) is configured to:

    - determine integer values a and b such that a is at least equal to the maximum value of the monitored data, b is at most equal to the minimum value of the monitored data and a-b is equal to a power of two,
    - calculate the scaled data y as $y=(x-b).2^{8-c}$, where x is the monitored data and $a-b=2^c$.

12. A computer-implemented method for detecting malwares in a resource-constrained device, the method comprising:

- measuring, at a predefined adaptable monitoring period, internal hardware events related data,
- executing a first machine learning algorithm on the device, for providing a confidence score that each monitored data is a malware, the local machine learning algorithm being configured to raise an alert if the confidence score is higher than a first predefined alert threshold and to locally store the monitored data if the confidence score is lower than the first predefined alert threshold and higher than a second predefined suspicious threshold,
- transmitting the stored monitored data, at a predefined transmission rate to a remote server,
- executing, at the remote server, a second machine learning algorithm on the transmitted monitored data to detect it if corresponds to malware.

13. A computer program product, the computer program product comprising a computer-readable storage medium having computer executable instructions embodied therewith, the computer executable instructions being executable by a processor to cause the processor to perform the steps of the method of claim 12.

**Patentansprüche**

1. System zum Erkennen von Schadsoftware auf einer ressourcenbeschränkten Vorrichtung (200), das System umfassend:

   - ein Überwachungsmodul (203), das in die Vorrichtung (200) integriert ist, zum Messen, in einem vordefinierten, anpassbaren Überwachungszeitraum, interner Hardware-Ereignisdaten (202),
   - ein lokales maschinelles Lernmodul (205) das in der Vorrichtung (200) integriert ist, zum Bereitstellen eines Konfidenzwerts, dass es sich bei allen überwachten Daten um Schadsoftware handelt, wobei das lokale maschinelle Lernmodul konfiguriert ist, einen Alarm (207) auszulösen, wenn der Konfidenzwert einen ersten vordefinierten Alarmschwellenwert überschreitet, und die überwachten Daten lokal im Speicher (206) zu speichern, wenn der Konfidenzwert unter dem ersten vordefinierten Alarmschwellenwert und über einem zweiten vordefinierten Verdachtsschwellenwert liegt,
   - ein fernes maschinelles Lernmodul (208), das in einem Remote-Server integriert ist, zum Empfangen der gespeicherten überwachten Daten mit einer vordefinierten Übertragungsrate und zum Verarbeiten der empfangenen Daten, um zu erkennen, ob sie Schadsoftware entsprechen.

2. System zum Erkennen von Schadsoftware nach Anspruch 1, wobei es sich bei den internen Hardware-Ereignisdaten um Hardware-Ereigniszähler handelt.

3. System zum Erkennen von Schadsoftware nach Anspruch 2, das weiter dedizierte Hardware-Leistungszähler (304) umfasst, die konfiguriert sind, Hardware-Ereigniszähler zu speichern und für das Betriebssystem der Vorrichtung nicht zugänglich zu sein.

4. System zum Erkennen von Schadsoftware nach einem der vorstehenden Ansprüche, wobei das lokale maschinelle Lernmodul (205) einen ersten maschinellen Lernalgorithmus implementiert und das ferne maschinelle Lernmodul (208) einen zweiten maschinellen Lernalgorithmus implementiert, der höhere Erkennungsgenauigkeit aufweist als der erste maschinelle Lernalgorithmus.

5. System zum Erkennen von Schadsoftware nach Anspruch 4, wobei der zweite maschinelle Lernalgorithmus ein maschineller Zeitreihen-Lernalgorithmus ist, der eine Verlaufstabelle zum Speichern einer vordefinierten Anzahl n von Stichproben aufweist, und das lokale maschinelle Lernmodul weiter konfiguriert ist, wenn der Konfidenzwert niedriger als der erste vordefinierte Alarmschwellenwert und höher als der zweite vordefinierte Verdachtsschwellenwert ist, die überwachten Daten und höchstens n aufeinanderfolgende vorherige überwachte Daten zu speichern, die einen Konfidenzwert aufweisen, der niedriger als der zweite vordefinierte Verdachtsschwellenwert ist.

6. System zum Erkennen von Schadsoftware nach einem der vorstehenden Ansprüche, wobei der erste vordefinierte Alarmschwellenwert bestimmt wird, sodass die überwachten Daten, für die vom lokalen maschinellen Lernmodul ein Alarm ausgelöst wird, eine vorbestimmte Anzahl an Fehlalarmen aufweisen.

7. System zum Erkennen von Schadsoftware nach Anspruch 6, wobei der erste vordefinierte Alarmschwellenwert bestimmt wird, nachdem das lokale maschinelle Lernmodul derart trainiert wurde, dass eine Menge, die der vordefinierten Menge an Fehlalarmen entspricht, an Konfidenzwerten von Trainingsdaten, die normalen Anwendungen entsprechen, über dem ersten vordefinierten Alarmschwellenwert liegt.

**8.** System zum Erkennen von Schadsoftware nach einem der vorstehenden Ansprüche, wobei der zweite vordefinierte Verdachtsschwellenwert derart bestimmt wird, dass die Menge der lokal gespeicherten Daten, die keine Schadsoftware sind, auf eine vordefinierte Menge minimiert wird.

**9.** System zum Erkennen von Schadsoftware nach einem der vorstehenden Ansprüche, wobei der vorbestimmte Überwachungszeitraum höchstens der Hälfte einer Mindestzeit entspricht, die jeder Prozess auf der Vorrichtung laufen muss, bevor er vom Betriebssystem der Vorrichtung unterbrochen wird.

**10.** System zum Erkennen von Schadsoftware nach einem der vorstehenden Ansprüche, umfassend ein Datenbegrenzungsmodul (204), das zum Skalieren der überwachten Daten auf einen normalisierten Bereich konfiguriert ist.

**11.** System zum Erkennen von Schadsoftware nach Anspruch 10, wobei das Datenbegrenzungsmodul (204) konfiguriert ist:

- ganzzahlige Werte a und b zu bestimmen, so dass a mindestens dem Maximalwert der überwachten Daten gleich ist, b höchstens dem Minimalwert der überwachten Daten gleich ist und a-b einer Zweierpotenz gleich ist,
- die skalierten Daten y als $y=(x-b).2^{8-c}$ zu berechnen, wobei x die überwachten Daten sind und $a-b=2^c$.

**12.** Computerimplementiertes Verfahren zum Erkennen von Schadsoftware auf einer ressourcenbeschränkten Vorrichtung, das Verfahren umfassend:

- Messen, in einem vordefinierten, anpassbaren Überwachungszeitraum, interner Hardware-Ereignisdaten,
- Ausführen eines ersten maschinelle Lernalgorithmus auf der Vorrichtung, zum Bereitstellen eines Konfidenzwerts, dass es sich bei allen überwachten Daten um Schadsoftware handelt, wobei der lokale maschinelle Lernalgorithmus konfiguriert ist, einen Alarm auszulösen, wenn der Konfidenzwert einen ersten vordefinierten Alarmschwellenwert überschreitet, und die überwachten Daten lokal zu speichern, wenn der Konfidenzwert unter dem ersten vordefinierten Alarmschwellenwert und über einem zweiten vordefinierten Verdachtsschwellenwert liegt,
- Übertragen der gespeicherten Überwachungsdaten mit einer vordefinierten Übertragungsrate an einen Remote-Server,
- Ausführen, auf dem Remote-Server, eines zweiten maschinellen Lernalgorithmus auf den übertragenen überwachten Daten, um zu erkennen, ob sie Schadsoftware entsprechen.

**13.** Computerprogrammprodukt, wobei das Computerprogrammprodukt ein computerlesbares Speichermedium umfasst, das computerausführbare Anweisungen aufweist, die darin eingebettet sind, wobei die computerausführbaren Anweisungen von einem Prozessor ausgeführt werden können, um den Prozessor zu veranlassen, die Schritte des Verfahrens nach Anspruch 12 durchzuführen.

## Revendications

**1.** Système de détection de logiciels malveillants sur un dispositif aux ressources limitées (200), le système comprenant :

- un module de surveillance (203), intégré au dispositif (200), pour mesurer, à une période de surveillance adaptable prédéfinie, les données relatives aux événements matériels internes (202),
- un module d'apprentissage automatique local (205), intégré au dispositif (200), pour fournir un score de confiance indiquant que chaque donnée surveillée est un logiciel malveillant, le module d'apprentissage automatique local étant configuré pour déclencher une alerte (207) si le score de confiance est supérieur à un premier seuil d'alerte prédéfini et pour stocker localement les données surveillées dans une mémoire (206) si le score de confiance est inférieur au premier seuil d'alerte prédéfini et supérieur à un second seuil de suspicion prédéfini,
- un module d'apprentissage automatique distant (208), intégré sur un serveur distant, pour recevoir les données surveillées stockées à un débit de transmission prédéfini et traiter les données reçues pour détecter si elles correspondent à un logiciel malveillant.

**2.** Système de détection de logiciels malveillants selon la revendication 1, dans lequel les données relatives aux événements matériels internes sont des compteurs d'événements matériels.

**3.** Système de détection de logiciels malveillants de la revendication 2 comprenant en outre des compteurs de performance matériels dédiés (304) configurés pour stocker les compteurs d'événements matériels et étant inaccessibles par le système d'exploitation du dispositif.

4. Système de détection de logiciels malveillants selon l'une quelconque des revendications précédentes, dans lequel le module d'apprentissage automatique local (205) implémente un premier algorithme d'apprentissage automatique et le module d'apprentissage automatique distant (208) implémente un second algorithme d'apprentissage automatique présentant une précision de détection supérieure à celle du premier algorithme d'apprentissage automatique.

5. Système de détection de logiciels malveillants selon la revendication 4, dans lequel le second algorithme d'apprentissage automatique est un algorithme d'apprentissage automatique de séries temporelles présentant une table d'historique pour stocker un nombre prédéfini n d'échantillons et le module d'apprentissage automatique local est configuré en outre pour, lorsque le score de confiance est inférieur au premier seuil d'alerte prédéfini et supérieur au second seuil de suspicion prédéfini, stocker les données surveillées et au maximum n données surveillées consécutives précédentes présentant un score de confiance inférieur au second seuil de suspicion prédéfini.

6. Système de détection de logiciels malveillants selon l'une quelconque des revendications précédentes, dans lequel le premier seuil d'alerte prédéfini est déterminé de telle manière que les données surveillées pour lesquelles une alerte est déclenchée par le module d'apprentissage automatique local présentent une quantité prédéterminée de faux positifs.

7. Système de détection de logiciels malveillants selon la revendication 6, dans lequel le premier seuil d'alerte prédéfini est déterminé après que le module d'apprentissage automatique local est entraîné de telle manière qu'une quantité, égale à ladite quantité prédéterminée de faux positifs, de scores de confiance des données d'entraînement correspondant aux applications normales soit supérieure au premier seuil d'alerte prédéfini.

8. Système de détection de logiciels malveillants selon l'une quelconque des revendications précédentes, dans lequel le second seuil de suspicion prédéfini est déterminé de manière à minimiser la quantité de données stockées localement qui ne constituent pas un logiciel malveillant à une quantité prédéfinie.

9. Système de détection de logiciels malveillants selon l'une quelconque des revendications précédentes, dans lequel la période de surveillance prédéterminée est égale au maximum à la moitié d'une durée minimale pendant laquelle chaque processus doit s'exécuter sur le dispositif avant d'être préempté par le système d'exploitation du dispositif.

10. Système de détection de logiciels malveillants selon l'une quelconque des revendications précédentes comprenant un module de limitation de données (204) configuré pour mettre à l'échelle les données surveillées dans une plage normalisée.

11. Système de détection de logiciels malveillants selon la revendication 10, dans lequel le module de limitation de données (204) est configuré pour :

- déterminer des valeurs entières a et b, telles que a soit au moins égal à la valeur maximale des données surveillées, b soit au maximum égal à la valeur minimale des données surveillées et a-b soit égal à une puissance de deux,
- calculer les données mises à l'échelle y comme $y = (x-b).2^{8-c}$, où x représente les données surveillées et $a-b = 2^c$.

12. Procédé implémenté par ordinateur pour détecter des logiciels malveillants sur un dispositif aux ressources limitées, le procédé comprenant :

- la mesure, à une période de surveillance adaptable prédéfinie, de données relatives aux événements matériels internes,
- l'exécution d'un premier algorithme d'apprentissage automatique sur le dispositif, afin de fournir un score de confiance indiquant que chaque donnée surveillée est un logiciel malveillant, l'algorithme d'apprentissage automatique local étant configuré pour déclencher une alerte si le score de confiance est supérieur à un premier seuil d'alerte prédéfini et pour stocker localement les données surveillées si le score de confiance est inférieur au premier seuil d'alerte prédéfini et supérieur à un second seuil de suspicion prédéfini,
- la transmission des données surveillées stockées, à un débit de transmission prédéfini, vers un serveur distant,
- l'exécution, sur le serveur distant, d'un second algorithme d'apprentissage automatique sur les données surveillées transmises afin de détecter si elles correspondent à un logiciel malveillant.

13. Produit de programme informatique, le produit de programme informatique comprenant un support de stockage lisible par ordinateur contenant des instructions exécutables par ordinateur, les instructions exécutables par ordinateur étant exécutables par un processeur pour amener le processeur à réaliser les étapes du procédé selon la revendication 12.

FIG.1

FIG.2

301

302

CPU - OS

Secure Monitor

config reg 1

config reg 2

config reg n

counter 1

counter 2

counter n

Shadow config reg 1

Shadow config reg 2

Shadow config reg n

Shadow counter 1

Shadow counter 2

Shadow counter n

Shadow HPCs

303

304

FIG.3

(a) dist1

(b) dist2

(c) dist3

(d) dist4

FIG.4

EP 4 235 469 B1

FIG.5

FIG.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9996694 B
- US 20190340392 A
- US 20190130101 A
- US 2020293657 A

### Non-patent literature cited in the description

- **BOURDON MALCOLM et al.** Hardware performance counters based anomaly detection in massively deployed smart industrial devices. *IEEE 19th international symposium on network computing and applications (NCA)*, 2020
- Lambda. **KADIYALA SAI PRAVEEN**. ACM transactions on embedded computing systems. ACM
- Unsupervised anomaly based malware detection using hardware features. **ADRIAN TANG** ; **SIMHA SETHUMADHAVAN** ; **SALVATORE J STOLFO**. In International Workshop on Recent Advances in Intrusion Detection. Springer, 2014, 109-129
- **SANJEEV DAS** ; **YANG LIU** ; **WEI ZHANG** ; **MAHINTHAM CHANDRAMOHAN**. Semantics based online malware detection: Towards efficient real-time protection against malware. *IEEE transactions on information forensics and security*, 2015, vol. 11 (2), 289-302
- **XUEYANG WANG** ; **SEK CHAI** ; **MICHAEL ISNARDI** ; **SEHOON LIM** ; **RAMESH KARRI**. Hardware Performance counter-based malware identification and detection with adaptive compressive sensing. *ACM Trans. ARchit. Code Optim*, March 2016, vol. 13, 1
- **SANJEEV DAS** ; **YANG LIU** ; **WEI ZHANG** ; **MAHINTHAM CHANDRAMOHAN**. Semantics-based online malware detection: Towards efficient real-time protection against malware. *IEEE transactions on information forensics and security*, 2015, vol. 11 (2), 289-302
- *ARM Cortex-A72 MPCore Processor technical reference manual R0p1*, https://developer.arm.com/-documentation/100095/0001/performance-monitor-unit/events